Europäisches Patentamt

(19) European Patent Office

Office européen des brevets

(11) Veröffentlichungsnummer : **0 306 728 B1**

(12) **EUROPÄISCHE PATENTSCHRIFT**

(45) Veröffentlichungstag der Patentschrift :
**17.04.91 Patentblatt 91/16**

(21) Anmeldenummer : **88113103.1**

(22) Anmeldetag : **12.08.88**

(51) Int. Cl.⁵ : **B60R 1/06**

(30) Priorität : 09.09.87 DE 3730219
06.04.88 DE 3811448

(43) Veröffentlichungstag der Anmeldung :
**15.03.89 Patentblatt 89/11**

(45) Bekanntmachung des Hinweises auf die
Patenterteilung :
**17.04.91 Patentblatt 91/16**

(84) Benannte Vertragsstaaten :
**DE ES FR GB IT SE**

(56) Entgegenhaltungen :
**EP-A- 0 064 422**
**EP-A- 0 090 909**
**EP-A- 0 222 064**
**DE-A- 3 211 794**
**US-A- 4 050 776**

(73) Patentinhaber : **MEKRA Rangau Plastics**
**GmbH & Co KG**
**Schuckertstrasse 12-20**
**W-8510 Fürth/Bay. 18 (DE)**

(72) Erfinder : **Lang, Heinrich**
**W-8531 Ergersheim (DE)**
Erfinder : **Seiboth, Wolfgang**
**Danziger Ring 55**
**W-8532 Bad Windsheim (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

(54) Motorisch verstellbarer Rückspiegel.

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen motorisch verstellbaren Rückspiegel nach dem Oberbegriff des Anspruches 1.

Bei einem derartigen aus der DE-AS 28 22 681 (entsprechend FR-OS 24 26 590 und SE-OS 79 04 338) bekannten Ruckspiegel sind an einer fest mit der Befestigungseinrichtung verbundenen Grundplatte Stellantriebe angebracht. Das Stellglied des einen Stellantriebes greift unmittelbar am Gehäuse an und verschwenkt das Gehäuse um eine Querachse eines Kreuzgelenks, das zwischen dem Gehäuse und der Grundplatte angeordnet ist. Der andere Stellantrieb greift am Kreuzgelenk an und verschwenkt so das Gehäuse um seine Längsachse. Dieser bekannte Spiegel ist konstruktiv umständlich aufgebaut, so daß die Montage sehr aufwendig ist. Weiterhin ist die Einbautiefe der Stellmotor-Anordnung verhältnismäßig groß, so daß das Gehäuse wiederum so tief wird, daß das Blickfeld des Fahrers in Richtung schräg nach vorn erheblich eingeschränkt wird, was sich bei Rangiermanövern, bei welchen es auf eine sehr exakte Platzausnutzung ankommt, als nachteilig erweist.

Aus der EP-OS 0 090 909 ist es zur Lösung des letztgenannten Problems für motorisch verstellbare Rückspiegel bereits bekannt, die Stellmotor-Anordnung unmittelbar mit der Befestigungseinrichtung zu verbinden. Diese bekannte Ausgestaltung führt aber nicht zu einer ausreichend stabilen Verbindung zwischen Gehäuse und Befestigungseinrichtung, soweit es sich um besonders große Rückspiegel handelt.

Der Erfindung liegt daher die Aufgabe zugrunde, einen Rückspiegel der gattungsgemäßen Art so auszugestalten, daß er bei möglichst einfachem Aufbau und möglichst einfacher Montagemöglichkeit und besonders flacher Ausgestaltung sehr stabil ist.

Diese Aufgabe wird erfindungsgemäß durch die Merkmale im Kennzeichnungsteil des Anspruches 1 gelöst. Bei der erfindungsgemäßen Ausgestaltung sind die Stellantriebe fest mit dem Gehäuse verbunden und in unmittelbarer Nachbarschaft zur Spiegelglasscheibe angeordnet, so daß sie verhältnismäßig weit auseinandergezogen werden können, ohne daß dies sich auf die Tiefe des Gehäuses, und zwar insbesondere im Bereich der zum Fahrerhaus des Kraftfahrzeugs hin anzuordnenden Außenlängswand auswirkt. Dadurch daß die Stellantriebe zwischen der Grundplatte und der Trägerplatte angeordnet sind, wird hier eine flache Baueinheit geschaffen, die leicht in das Gehäuse eingesetzt bzw. aus diesem herausgenommen werden kann. Die drei Universal-Schwenkgelenke liegen in einer Ebene, die der Grundplatte unmittelbar benachbart ist, wobei jeweils zwei Universal-Schwenkgelenke eine Schwenkachse für den jeweils anderen Stellantrieb bilden. Die Unteransprüche 2 bis 6 geben besonders vorteilhafte Ausgestaltungen wieder.

Besonders vorteilhafte Weiterbildungen sind den Ansprüchen 7 bis 9 zu entnehmen. Durch die spezielle Ausgestaltung des Universal-Schwenkgelenks nach Anspruch 7 und insbesondere nach Anspruch 8 wird eine spielfreie Lagerung erreicht. Weiterhin wird in der Weiterbildung nach Anspruch-9 erreicht, daß der Spiegel auch bei stillstehendem Stellantrieb von Hand verstellt werden kann, da nur die Reibmomente überwunden werden müssen. Darüber hinaus ermöglicht es die Ausgestaltung nach Anspruch 7 und insbesondere nach Anspruch 8 auch, den Spiegel ohne Stellantrieb lediglich von Hand verstellbar auszugestalten, d.h. der Spiegel kann ansonsten unverändert bleiben ; er kann also in einer einfachen und in einer aufwendigen – elektromotorisch verstellbaren Ausgestaltung – hergestellt werden.

Zwei Ausführungsbeispiele der Erfindung werden nachfolgend anhand der Zeichnung näher erläutert. Es zeigt

Fig. 1 eine Draufsicht auf einen Rückspiegel,

Fig. 2 einen Längsschnitt durch den Rückspiegel entsprechend der Schnittlinie II-II in Fig. 1, wobei eine im Gehäuse des Rückspiegels angeordnete Stellmotor-Anordnung nicht geschnitten wurde,

Fig. 3 einen Querschnitt durch den Rückspiegel entsprechend der Schnittlinie III-III in Fig. 1, wobei die Stellmotor-Anordnung wiederum nicht geschnitten wurde,

Fig. 4 eine Draufsicht auf die Stellmotor-Anordnung und deren Grundplatte,

Fig. 5 eine Längsansicht einer weiteren Ausführungsform eines Rückspiegels entsprechend dem Sichtpfeil V in Fig. 7 mit aufgebrochen dargestelltem Gehäuse,

Fig. 6 eine Längsansicht des Rückspiegels entsprechend dem Sichtpfeil VI in Fig. 7 mit aufgebrochen dargestelltem Gehäuse und

Fig. 7 eine Seiten-Ansicht des Spiegels entsprechend dem Sichtpfeil VII in Fig. 5 mit aufgebrochen dargestelltem Gehäuse.

Der in der Zeichnung dargestellte Rückspiegel für Lastkraftwagen weist ein Gehäuse 1 auf, das eine Glasaufnahme 2 aufweist, in der eine gewölbte Spiegelglasscheibe 3 mittels eines Halterings 4 auswechselbar gehalten ist. Die rahmenartige Glasaufnahme 2 begrenzt die größte – bei herausgenommener Spiegelglasscheibe 3 nach außen offene – Querschnittsfläche des Gehäuses 1. Die Glasaufnahme 2 ist – entsprechend der Querschnittsfläche der Spiegelglasscheibe 3 – etwa rechteckig ausgebildet. Die durch sie begrenzte Fläche weist zwei senkrecht zueinander verlaufende Symmetrieachsen 5, 6 auf, wobei die eine Symmetrieachse 5 deutlich länger als die Symmetrieachse 6 ist. In der Praxis ist die Symmetrieachse 5 etwa doppelt so lang wie die Symmetrieachse 6.

Der Rückspiegel weist eine Befestigungseinrichtung 7 nach Art einer Stativklemme auf, mittels derer eine klemmende Befestigung an einer Stange 8 eines Befestigungsbügels möglich ist. Ein solcher L- oder C-förmiger Befestigungsbügel wird seitlich am Fahrerhaus eines LKW angebracht, wie dies in der Praxis allgemein üblich ist. Die Stange 8 wird hierbei im wesentlichen senkrecht angeordnet. Ihre Achse 9 verläuft im wesentlichen parallel zur langen Symmetrieachse 5. Die Befestigungseinrichtung 7 weist zwei an der Stange 8 anliegende Klemmbacken 10, 11 auf, die mittels Schrauben 12 zusammengehalten werden und die Stange 8 klemmend zwischen sich aufnehmen. Bei gelösten Schrauben 12 kann der Rückspiegel in Richtung der Achse 9 auf der Stange 8 verschoben und um die Stange 8 verschwenkt werden. Die eine Klemmbacke 11 ist schwenkbar an einem Sockel 13 der Befestigungseinrichtung 7 angebracht und gegenüber diesem um eine Schwenkachse 14 schwenkbar, die etwa parallel zur Symmetrieachse 6 verläuft. Die Klemmbacke 11 und der Sockel 13 sind mittels einer Klemmschraube 15 miteinander verbunden, deren Längsachse mit der Schwenkachse 14 zusammenfällt, so daß bei gelöster Klemmschraube 15 Schwenkbewegungen des Rückspiegels um die Schwenkachse 14 möglich sind. Durch die geschilderten Einstellmöglichkeiten mittels der Schrauben 12 und der Klemmschraube 15 ist eine beliebige Grundeinstellung des Rückspiegels, d.h. des Gehäuses 1 mit Spiegelglasscheibe 3 relativ zur Stange 8 und damit relativ zum Fahrerhaus eines LKW möglich.

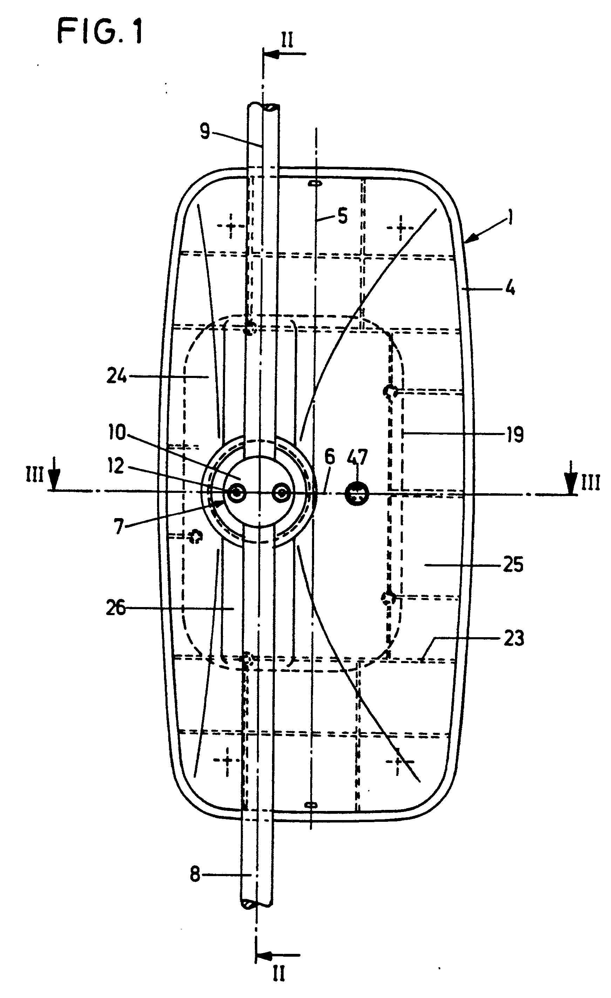

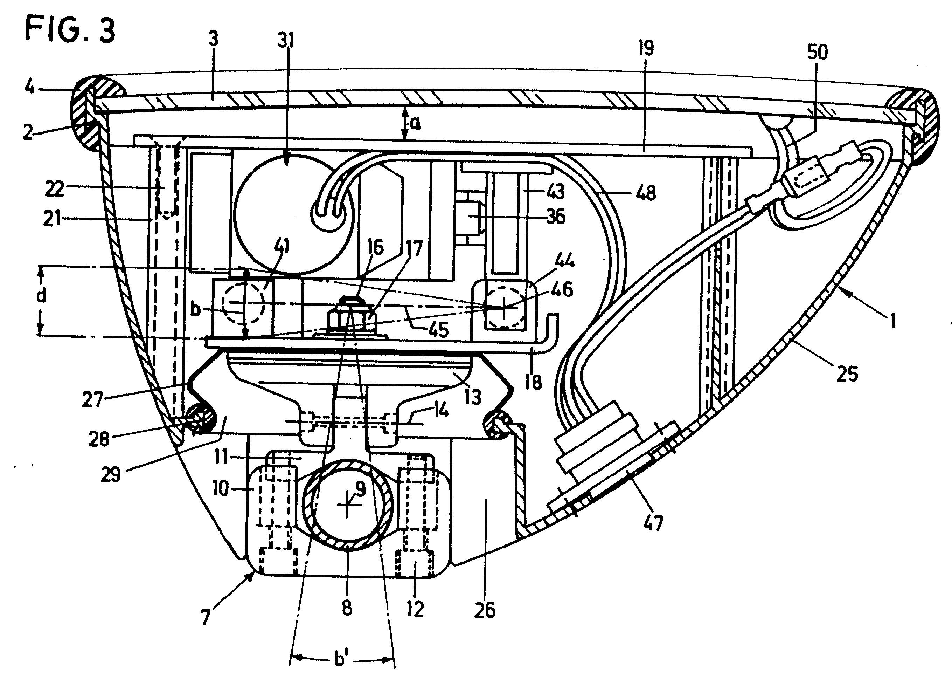

Der Sockel 13 ist mittels eines Gewindezapfens 16 und einer Mutter 17 an einer Grundplatte 18 befestigt, die etwa parallel zu den beiden Achsen 9, 14 angeordnet ist. Wiederum etwa parallel zu dieser Grundplatte 18 ist eine Tragplatte 19 vorgesehen. Zwischen der Grundplatte 18 und der Tragplatte 19 ist eine nachfolgend noch genauer zu beschreibende Stellmotor-Anordnung 20 vorgesehen. Die Tragplatte 19 ist im wesentlichen parallel zur Glasaufnahme 2, also zur Spiegelglasscheibe 3 angeordnet, und weist nur einen geringen Abstand a von der Glasaufnahme 2 auf. Dieser Abstand a beträgt etwa 5 bis 10 mm. Die Tragplatte 19 liegt gegen einstückig mit dem Gehäuse 1 ausgebildete Stützrohre 21 an und ist an diesen mittels Schrauben 22 befestigt. Diese Stützrohre 21 sind an den Schnittflächen von Versteifungsrippen ausgebildet, die das Gehäuse 1 aussteifen. Da – wie insbesondere den Fig. 1 und 3 zu entnehmen ist – die Stange 8 außermittig zur langen Symmetrieachse 5 verläuft, weist das Gehäuse 1 eine relativ zur Spiegelglasscheibe 3 bzw. der Glasaufnahme 2 steil gewölbte Außenlängswand 24 und eine entsprechend flach gewölbte Außenlängswand 25 auf. Diese beiden Außenlängswände 24, 25 nehmen zwischen sich einen nach außen offenen Längskanal 26 auf, in dem die Stange 8 teilweise angeordnet ist und der die Klemmbacken 10, 11 der Befestigungseinrichtung 7 zumindest teilweise aufnimmt. Auch die Klemmschraube 15 ist über diesen Längskanal 26 von außen zugänglich. Die flachgewölbte Außenlängswand 25 wird im Betrieb dem Fahrerhaus des LKW zugewandt angeordnet.

Zwischen dem Sockel 13 und der Grundplatte 18 ist eine Dichtungsmanschette 27 klemmend gehalten, die am Rand 28 einer Öffnung 29 des Gehäuses 1 festgelegt ist, die im Boden 30 des Längskanals 26 ausgebildet ist und die die Befestigungseinrichtung 7 umgibt. Die Befestigungseinrichtung 7 mit der Grundplatte 18 ist also im Betrieb fest an der Stange 8 angebracht und damit ortsfest – wenn auch verstellbar – zum Fahrerhaus des LKW eingestellt. Dagegen ist das Gehäuse 1 mit der Spiegelglasscheibe 3 fest mit der Tragplatte 19 verbunden. Die gesamte Einheit ist relativ zur Grundplatte 18 mittels der nachfolgend zu schildernden Stellmotor-Anordnung 20 verstellbar.

Auf der Tragplatte 19 sind zwei elektromotorische Stellantriebe 31, 32 angebracht, die jeweils aus einem Elektromotor 33 und einem diesem nachgeordneten Untersetzungsgetriebe 34 bestehen. Die Abtriebsachsen 35, 36 dieser beiden Stellantriebe 31, 32 sind senkrecht zueinander angeordnet, wobei jeweils eine Abtriebsachse 35 bzw. 36 zu einer der Symmetrieachsen 5, 6 parallel verläuft. An der jeweiligen Abtriebsachse 35 bzw. 36 jedes Stellantriebes 31, 32 ist ein Exzentertrieb 37 angebracht, an dem ein Exzenterhebel 38 um eine zur jeweiligen Abtriebsachse 35, 36 parallele Schwenkachse 39 schwenkbar angelenkt ist. Jeder Exzenterhebel 38 ist mit seinem der Schwenkachse 39 entgegengesetzten Ende an der Grundplatte 18 angelenkt. Die Anlenkung ist mittels jeweils eines Universal-Schwenkgelenks 41 bzw. 42 realisiert, bei dem es sich beispielsweise um ein Kugelgelenk handeln kann. Jeweils ein Exzentertrieb 37 und ein angelenkter Exzenterhebel 38 bilden ein Stellglied.

An der Tragplatte 19 ist weiterhin eine Lagerstütze 43 angebracht, die ebenfalls über ein Universal-Schwenkgelenk 44 mit der Grundplatte 18 verbunden ist. Das Universal-Schwenkgelenk 41 des Stellantriebs 31 bildet zusammen mit dem Universal-Schwenkgelenk 44 der Lagerstütze 43 eine Schwenkachse 45. Das Universal-Schwenkgelenk 42 des Stellantriebes 32 bildet zusammen mit dem Universal-Schwenkgelenk 44 der Lagerstütze 43 eine weitere Schwenkachse 46. Die beiden Schwenkachsen 45, 46 sind senkrecht zueinander und jeweils parallel zur Symmetrieachse 6 bzw. 5 angeordnet. Wenn der Stellantrieb 31 angetrieben wird, dann wird die Tragplatte 19 samt Gehäuse 1 und Spiegelglasscheibe 3 um die Schwenkachse 46 relativ zur ortsfesten Grundplatte 18 des Rückspiegels um einen Winkel b verändert, der maximal etwa 15° beträgt. Dies führt zu einer Verschwenkung des Gehäuses 1 relativ zur Achse 9 der Stange 8 um einen Winkel b', der maximal etwa 15° beträgt. Die Winkel b und b' sind identisch.

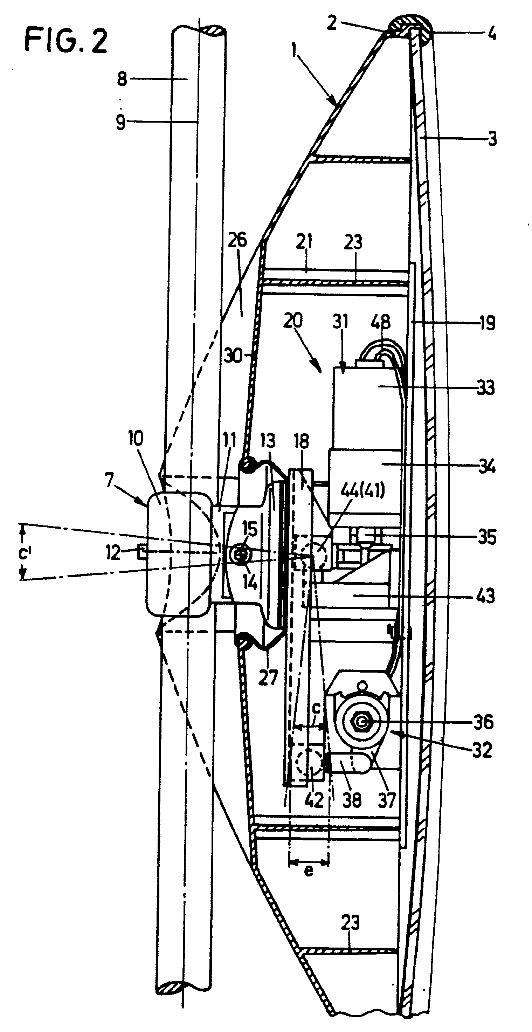

Wenn der Stellantrieb 32 betätigt wird, dann wird die Tragplatte 19 relativ zur ortsfesten Grundplatte 18 um die Schwenkachse 45 um einen Winkel c verschwenkt, der etwas kleiner sein kann als der Winkel b. Er beträgt maximal 10 bis 12°. Durch diese Schwenkbewegung wird das Spiegelgehäuse um einen Winkel c' verschwenkt, wobei wiederum c und c' identisch sind. In Fig. 3 ist der maximale Hubbereich d des Exzenterhebels 38 des Stellantriebes 31 erkennbar. Gleichermaßen ist in Fig. 2 der maximale Hubbereich e des Exzenterhebels 38 des Stellantriebs 32 erkennbar.

In der flach gewölbten Außenlängswand 25 ist eine Steckdose 47 angebracht, von der elektrische Leitungen 48, 49 zu den Elektromotoren 33 der beiden Stellantriebe 31, 32 führen. Weiterhin führt eine Leitung 50 zu einer nicht näher dargestellten Heizung der Spiegelglasscheibe 3. Die Betätigungsschalter für die Stellantriebe 31, 32 befinden sich im Kraftfahrzeug und sind daher nicht dargestellt.

Die beiden Stellantriebe 31, 32 sind im wesentlichen benachbart zu der steil angestellten Außenlängswand 24 angeordnet. Die Grundplatte 18, die Tragplatte 19, die Stellantriebe 31, 32, die Lagerstütze 43 und die an der Grundplatte 18 befestigte Befestigungseinrichtung 7 mit der Dichtungsmanschette 27 bilden eine Baugruppe, die in das Gehäuse 1 eingeschoben wird, wobei zur Befestigung nur die Schrauben 22 eingeschraubt zu werden brauchen und die Dichtungsmanschette 27 über den Rand 28 gezogen werden muß.

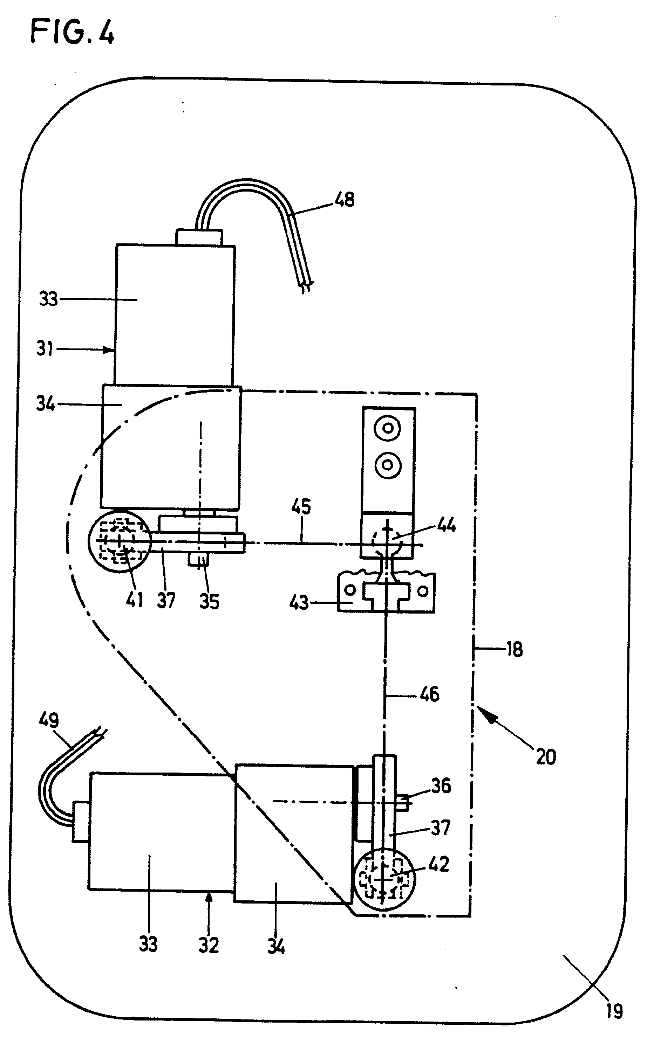

Wie insbesondere aus Fig. 4 ersichtlich ist, ermöglicht die geschilderte Stellmotor-Anordnung 20 große Abstände der einzelnen Stützpunkte, die durch die Universal-Schwenkgelenke 41, 42, 44 gebildet sind. Die gesamte Bauweise ist also sehr stabil.

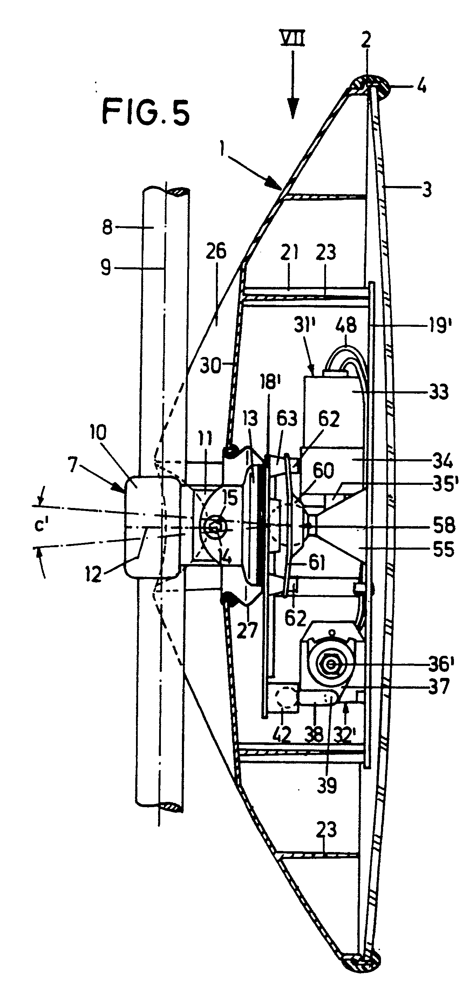

Die Ausgestaltung nach den Fig. 5 bis 7 unterscheidet sich von der nach den Fig. 1 bis 4 nicht in prinzipieller Hinsicht, sondern hinsichtlich – z.T. sehr vorteilhafter – Einzelheiten. Aus diesem Grunde werden für identische Teile mit den Fig. 1 bis 4 identische Bezugsziffern und für funktionell identische, aber konstruktiv geringfügig andere Teile, die Bezugsziffern aus den Fig. 1 bis 4 jeweils mit einem hochgesetzten Strich verwendet. Bezüglich dieser Teile erfolgt insoweit keine systematische neue Beschreibung ; es wird vielmehr auf die vorherige Beschreibung verwiesen.

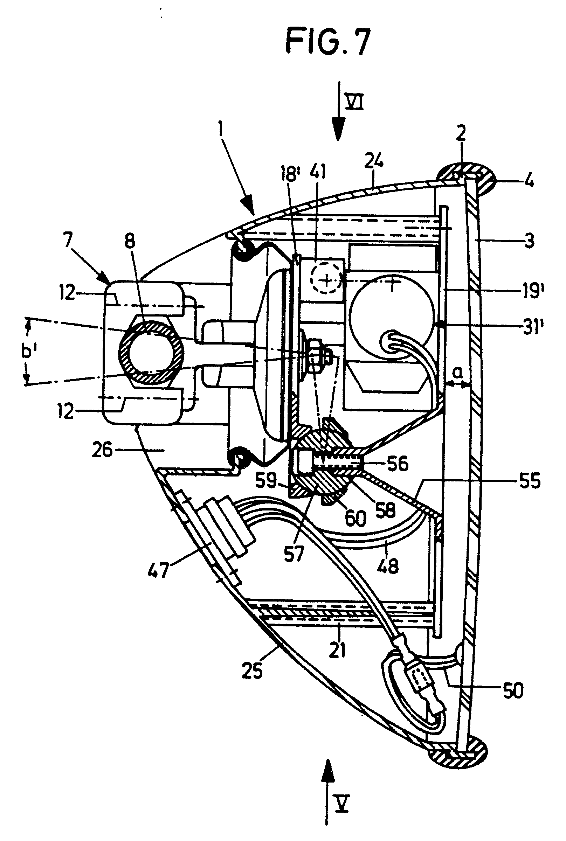

An der Tragplatte 19' ist eine Lagerstütze 55 ausgebildet, die – wie die Fig. 5 und 7 erkennen lassen – etwa kegelstumpfförmig ausgebildet ist und – beispielsweise durch Tiefziehen – einstückig aus der Tragplatte 19' ausgeformt sein kann. Am oberen Ende dieser Lagerstütze 55 ist mittels einer Schraube 56 ein kugelförmiger Lagerkörper 57 eines Universal-Schwenkgelenks 58 befestigt. Die Grundplatte 18' ist mit einer dem kugelförmigen Lagerkörper 57 angepaßten Lagerschale 59 in Form eines Kugelkalottenrings versehen, mittels der sie sich von oben auf dem Lagerkörper 57 abstützt, wie insbesondere Fig. 7 zu entnehmen ist. Gegen den Lagerkörper 57 liegt auf der der Lagerstütze 5 zugesandten Seite des Lagerkörpers 57 ein Lagerdeckel 60 an, der ebenfalls in Form eines Kugelkalottenrings ausgebildet ist. Dieser Lagerdekkel 60 ist mit elastisch verformbaren Befestigungsstegen 61 versehen, die im Abstand von dem Lagerkörper 57 mittels Schrauben 62 an der Grundplatte 18' befestigt sind. Hierzu sind an der Grundplatte 18' Gewindehülsen 63 angebracht. Durch die elastische Verformung der Befestigungsstege 61 beim Anschrauben des Lagerdeckels 60 an die Grundplatte 18' werden die Lagerschale 59 und der Lagerdeckel 60 elastisch gegen den Lagerkörper 57 gedrückt, d.h. zwischen dem durch die Lagerschale 59 und den Lagerdeckel 60 gebildeten Lager und dem Lagerkörper 57 ist eine definierte Reibung.

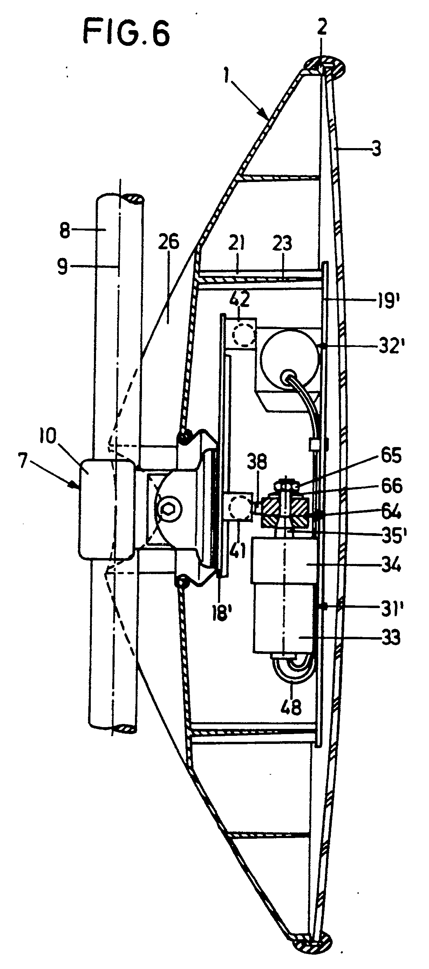

Wie aus Fig. 6 ersichtlich ist, ist zwischen dem jeweiligen Exzentertrieb 37 und der jeweiligen Abtriebsachse 35' bzw. 36' eine Rutschkupplung 64 vorgesehen, deren Haltekraft und damit Halte-Drehmoment mittels einer Gewindemutter 65 und zwischen der Rutschkupplung und dieser Gewindemutter 65 angeordnete Tellerfedern 66 einstellbar ist.

Bei der Ausführung nach den Fig. 5 bis 7 kann der Spiegel auch in seiner Grundeinstellung verändert werden, indem hierauf ein Drehmoment ausgeübt wird, mittels dessen die durch die Einstellung der Vorspannung am Universal-Schwenkgelenk 58 und an den Rutschkupplungen 64 vorgegebene Haftreibungs-Haltekräfte überwunden werden.

Der Spiegel in der Ausgestaltung nach den Fig. 5 und 7 kann auch ohne die Stellantriebe 31', 32' verwendet werden, da die Halterung durch das Universal-Schwenkgelenk 58 aufgrund der geschilderten Vorspannung ausreichend ist. Andererseits ist die relativ starke Vorspannung im Universal-Schwenkgelenk 58 im Hinblick auf die Verstellung des Spiegels mittels der Stellantriebe 31', 32' ohne Belang, da aufgrund der hohen Untersetzung in den Untersetzungsgetrieben 34 von den Stellantrieben 31', 32' ausreichende Stellmomente zwischen Grundplatte 18' und Tragplatte 19' ausgeübt werden.

Wie sich aus den Fig. 5 und 7 ergibt, befindet sich das Universal-Schwenkgelenk 58 etwa in der Mitte der Spiegelscheibe 3, so daß Verschwenkbewegungen der Scheibe etwa um die Mitte erfolgen.

Das Universal-Schwenkgelenk 58 ist aufgrund der geschilderten Vorspannung von Lagerschale 59 und Lagerdeckel 60 relativ zueinander spielfrei.

## Ansprüche

1. Motorisch verstellbarer Rückspiegel für Kraftfahrzeuge, insbesondere Lastkraftwagen, mit einem eine Spiegelglasscheibe (3) aufnehmenden und haltenden Gehäuse (1), mit einer fest mit einem Kraftfahrzeug verbindbaren Befestigungseinrichtung (7), mit einer relativ zur Befestigungseinrichtung (7) ortsfesten Grundplatte (18 ; 18') und mit einer zwischen der Grundplatte (18 ; 18') und dem Gehäuse (1) angeordneten Stellmotor-Anordnung (20 ; 20'), die zwei Stellantriebe (31, 32 ; 31', 32') mit Stellgliedern aufweist, mittels derer das Gehäuse (1) um zwei etwa senkrecht zueinander verlaufende Schwenkachsen (45, 46) schwenk-verstellbar ist, dadurch gekennzeichnet, daß unmittelbar benachbart zur Spiegelglasscheibe (3) im Gehäuse (1) eine Trägerplatte (19 ; 19') relativ zum Gehäuse (1) fest angeordnet ist, daß auf der Trägerplatte (19 ; 19') im Bereich zwischen dieser und der Grundplatte (18 ; 18') die Stellantriebe (31, 32 ; 31', 32') angebracht sind, daß die Stellglieder der Stellantriebe (31, 32 ; 31', 32') mit der Grundplatte (18 ; 18') jeweils über ein Universal-Schwenkgelenk (41, 42) verbunden sind, daß auf der Tragplatte (19 ; 19') eine Lagerstütze (43; 55) angebracht ist, die mittels eines Universal-Schwenkgelenks (44 ; 58) mit der Grundplatte (18 ; 18') verbunden ist und daß das Universal-Schwenkgelenk (44 ; 58) der Lagerstütze (43 ; 55) und jeweils ein Universal-Schwenkgelenk (41, 42) eines Stellantriebs (31, 32 ; 31', 32') die dem jeweils anderen Stellantrieb (32, 31 ; 32', 31') zugeordnete Schwenkachse (46, 45) festlegen.

2. Rückspiegel nach Anspruch 1, dadurch gekennzeichnet, daß die Universal-Schwenkgelenke (41, 42, 44 ; 58) durch Kugelgelenke gebildet sind.

3. Rückspiegel nach Anspruch 1, wobei das Gehäuse (1) Außenlängswände (24, 25) aufweist, von denen eine relativ zur Spiegelglasscheibe (3) steiler und die andere flacher ansteht, und wobei eine Schwenkachse (46) etwa parallel zu den Außenlängswänden (24, 25) verläuft, dadurch gekennzeichnet, daß der zur Verschwenkung um die andere Schwenkachse (45) dienende Stellantrieb (31 ; 31') zwischen der Schwenkachse (46) und der steileren Außenlängswand (24) angeordnet ist.

4. Rückspiegel nach Anspruch 1, dadurch gekennzeichnet, daß die Grundplatte (18 ; 18'), die Tragplatte (19 ; 19'), die Stellantriebe (31, 32 ; 31', 32') und die Lagerstütze (43 ; 55) eine mit dem Gehäuse (1) lösbar verbindbare Baueinheit bilden.

5. Rückspiegel nach Anspruch 4, dadurch gekennzeichnet, daß zwischen der Grundplatte (18 ; 18') und der Befestigungseinrichtung (7) eine an einem Rand (28) einer Öffnung (29) des Gehäuses (1) festzulegende Dichtungsmanschette (27) befestigt ist.

6. Rückspiegel nach Anspruch 1, dadurch gekennzeichnet, daß die Stellantriebe (31, 32 ; 31', 32') jeweils durch einen Elektromotor (33) mit nachgeordnetem Untersetzungsgetriebe (34) gebildet sind, deren Stellglieder durch jeweils einen Exzentertrieb (37) mit angelenktem Exzenterhebel (38) gebildet sind.

7. Rückspiegel nach Anspruch 1, dadurch gekennzeichnet, daß das die Tragplatte (19') mit der Grundplatte (18') über die Lagerstütze (55) verbindende Universal-Schwenkgelenk (58) elastisch vorgespannt ist.

8. Rückspiegel nach Anspruch 7, dadurch gekennzeichnet, daß das Universal-Schwenkgelenk (58) einen auf der Lagerstütze (55) angebrachten, zumindest teilweise kugelförmigen Lagerkörper (57) aufweist, gegen den eine Lagerschale (59) der Grundplatte (18') einerseits und ein Lagerdeckel (60) elastisch gegeneinander verspannt anliegen.

9. Rückspiegel nach Anspruch 1, dadurch gekennzeichnet, daß die Stellantriebe (31', 32') mittels Rutschkupplungen (64) mit den Stellgliedern verbunden sind.

## Claims

1. Mechanically adjustable rear-view mirror for motor vehicles, particularly trucks, with a housing (1) receiving and holding a mirror glass (3), with a mounting unit (7) which can be securely fixed to a vehicle, with a base plate (18 ; 18') which is fixed relative to the mounting unit (7) and with a servomotor unit (20 ; 20') situated between the base plate (18 ; 18') and the housing (1) and containing two servomotors (31, 32 ; 31', 32') with actuators by which the housing (1) can be pivoted around two pivot axes (45, 46) which lie practically perpendicular to one another, characterized in that a support plate (19 ; 19') immediately next to the mirror glass (3) in the housing (1) is securely mounted relative to the housing (1), that the servomotors (31, 32 ; 31', 32') are mounted to said support plate (19 ; 19') between said support plate and the base plate (18 ; 18'), that the actuators of the servomotors (31, 32 ; 31', 32') are each connected to the base plate (18, 18') by a universal joint (41, 42), that a bearing support (43 ; 55) is mounted on the support plate (19 ; 19') and is connected to the base plate (18 ; 18') by means of a universal joint (44 ; 58), and that the universal joint (44 ; 58) of the bearing support (43 ; 55) and one universal joint (41, 42) of each servomotor (31, 32 ; 31', 32') form the pivot axes (46, 45) of the other servomotor (31, 32 ; 31', 32').

2. Rear-view mirror in accordance with patent claim 1, characterized in that the universal joints (41, 42, 44 ; 58) are formed as universal ball joints.

3. Rear-view mirror in accordance with patent claim 1, wherein the housing (1) has exterior side panels (24, 25) one of which is steep relative to the mirror (3), and the other one is flatter, and whereby a pivot axis (46) runs roughly parallel to the exterior side panels (24, 25), characterized in that the servomotor (31 ; 31') needed to pivot around the other pivot axis (45) is mounted between the pivot axis (46) and the steeper exterior side panel (24).

4. Rear-view mirror in accordance with patent claim 1, characterized in that the base plate (18 ; 18'), the support plate (19 ; 19'), the servomotors (31, 32 ; 31', 32') and the bearing support (43 ; 55) form a removable unit with the housing (1).

5. Rear-view mirror in accordance with patent claim 4, characterized in that a sealing sleeve (27) is located between the base plate (18 ; 18') and the mounting unit (7) which is fixed to an edge (28) of an opening (29) in the housing (1).

6. Rear-view mirror in accordance with patent claim 1, characterized in that the servomotors (31, 32; 31', 32') each comprise an electric motor (33) followed by a reduction unit (34) having adjustment linkages each formed by one eccentric drive (37) with an attached control lever (38).

7. Rear-view mirror in accordance with patent claim 1, characterized in that the support plate (19') is under elastic tension relative to the base plate (18') via the universal joint (58) connected to the bearing support (55).

8. Rear-view mirror in accordance with patent claim 7, characterized in that the universal joint (58) has an at least partially spherical bearing body (57) attached to the bearing support (55) against which a backing shell (59) of the base plate (18') on the one side and a bearing cap (60) are held together by elastic tension.

9. Rear-view mirror in accordance with patent claim 1, characterized in that the servomotors (31', 32') are connected to the adjusting links by friction clutches (64).


**Revendications**

1. Rétroviseur à réglage motorisé pour véhicules automobiles, notamment des poids lourds, comportant un carter (1) recevant et maintenant la glace de rétroviseur (3), un dispositif de fixation (7) pouvant être relié de manière fixe à un véhicule automobile, une plaque de base (18 ; 18') fixe en position par rapport au dispositif de fixation (7), ainsi qu'un ensemble de réglage par moteurs (20 ; 20') disposé entre la plaque de base (18 ; 18') et le carter (1) et comprenant deux éléments d'entrainement (31, 32 ; 31', 32') avec des organes d'actionnement, à l'aide desquels le carter (1) peut être réglé par pivotement autour de deux axes de pivotement (45, 46) sensiblement perpendiculaires entre-eux, caractérisé en ce qu'une plaque-support (19 ; 19') est disposée dans le carter (1), de manière fixe par rapport à celui-ci et au voisinage immédiat de la glace de rétroviseur (3), en ce que les éléments d'entrainement (31, 32 ; 31', 32') sont montés sur la plaque-support (19 ; 19') dans l'espace entre celle-ci et la plaque de base (18 ; 18'), en ce que les organes d'actionnement des éléments d'entrainement (31, 32 ; 31', 32') sont reliés à la plaque de base (18 ; 18') chacun au moyen d'un joint universel de pivotement (41, 42), en ce que sur la plaque-support (19 ; 19') est monté un appui de palier (43 ; 55) qui est relié à la plaque de base (18 ; 18') au moyen d'un joint universel de pivotement (44 ; 58), et en ce que le joint universel de pivotement (44 ; 58) de l'appui de palier (43 ; 55) et à chaque fois un joint universel de pivotement (41, 42) d'un des éléments d'entrainement (31, 32 ; 31', 32') définissent l'axe de pivotement (46, 45) de l'autre élément d'entrainement respectif (32, 31 ; 32', 31').

2. Rétroviseur selon la revendication 1, caractérisé en ce que les joints universels de pivotement (41, 42, 44 ; 58) sont constitués par des articulations à rotule.

3. Rétroviseur selon la revendication 1, le carter (1) présentant des parois longitudinales extérieures (24, 25) dont l'une est en pente relativement plus importante par rapport à la glace de rétroviseur (3) et l'autre en pente plus douce, l'un des axes de pivotement (46) s'étendant de manière sensiblement parallèle aux parois longitudinales extérieures (24, 25), caractérisé en ce que l'élément d'entrainement (31 ; 31') destiné au pivotement autour de l'autre axe de pivotement (45), est disposé entre l'axe de pivotement (46) et la paroi longitudinale extérieure (24) en pente plus forte.

4. Rétroviseur selon la revendication 1, caractérisé en ce que la plaque de base (18 ; 18'), la plaque-support (19 ; 19'), les éléments d'entrainement (31, 32 ; 31', 32') et l'appui de palier (43 ; 55) constituent un module pouvant être relié de manière amovible au carter (1).

5. Rétroviseur selon la revendication 4, caractérisé en ce qu'un soufflet d'étanchéité (27) est fixé entre la plaque de base (18 ; 18') et le dispositif de fixation (7), le soufflet d'étanchéité devant être appliqué sur le bord (28) d'une ouverture (29) du carter (1).

6. Rétroviseur selon la revendication 1, caractérisé en ce que les éléments d'entrainement (31, 32 ; 31', 32') soit constitués chacun par un moteur électrique (33) avec un réducteur (34) en sortie, les organes d'actionnement de chacun des éléments d'entrainement étant constitués par une transmission à excentrique (37) sur laquelle est articulé un bras d'excentrique (38).

7. Rétroviseur selon la revendication 1, caractérisé en ce que la plaque-support (19') est reliée à la plaque de base (18') par une liaison à précontrainte élastique, au moyen de l'appui de palier (55) et du joint universel de pivotement (58) qui relient les deux plaques.

8. Rétroviseur selon la revendication 7, caractérisé en ce que le joint universel de pivotement (58) comporte un corps de palier (57) au moins partiellement de forme sphérique, monté sur l'appui de palier (55), et contre lequel viennent s'appliquer une coque de palier (59) de la plaque de base (18′) d'une part, et un couvercle de palier (60) d'autre part, ces deux parties étant serrées élastiquement l'une contre l'autre.

9. Rétroviseur selon la revendication 1, caractérisé en ce que les éléments d'entrainement (31′, 32′) sont reliés aux organes d'actionnement, par l'intermédiaire d'accouplement à glissement (64).

# FIG.1

FIG. 2

FIG. 3

EP 0 306 728 B1

# FIG.4

# FIG.5

# FIG.6

# FIG.7